# EUROPÄISCHE PATENTANMELDUNG

(11) **EP 2 351 608 A2**
(43) Veröffentlichungstag der Anmeldung: **03.08.2011**
(21) Anmeldenummer: 10188131.6
(22) Anmeldetag: 20.10.2010
(51) Int. Cl.: A63H 31/02, A63H 17/12

(54) **Überlastsicherung für eine Wellen-Baugruppe eines Spielzeugs**

(30) Priorität: 29.01.2010 DE 202010001558 U
(71) Anmelder: Bruder Spielwaren GmbH + Co. KG, 90768 Fürth (DE)
(72) Erfinder: Bruder, Paul Heinz, 90768, Fürth (DE)
(74) Vertreter: Rau, Schneck & Hübner

(57) **Zusammenfassung**

Eine Überlastsicherungsvorrichtung (2) für eine Wellen-Baugruppe eines Spielzeugs hat eine drehbar gelagerte Abtriebswelle (6) mit einer Wellenachse (5). Eine Wellenantriebseinrichtung ist durch die Überlastsicherungsvorrichtung vor einer Überlast aufgrund eines an der Abtriebswelle (6) angreifenden Drehmoments zu schützen. Die Abtriebswelle (6) ist mindestens zweiteilig ausgeführt und hat einen antriebsseitigen Antriebs-Wellenabschnitt und einen lastseitigen Last-Wellenabschnitt (4), der mit dem Antriebs-Wellenabschnitt zusammengesteckt ist. Eine Steckverbindung (12) zwischen dem Antriebs-Wellenabschnitt und dem Last-Wellenabschnitt (4) hat mit einem der Wellenabschnitte elastisch verbundene Federzungen (13), die mit Zungenaufnahmen (15) im anderen der Wellenabschnitte (4) derart zusammenwirken, dass bei einer Überlast die Federzungen (13) aus den Zungenaufnahmen (15) ausrücken, sodass die beiden Wellenabschnitte relativ zueinander um die Wellenachse (5) verdrehbar sind. Ein Spielzeug hat eine Seilwinde und eine derartige Überlastsicherungsvorrichtung. Die Wellen-Baugruppe und insbesondere die Abtriebswelle sind vor einer Überlast aufgrund eines an dieser angreifenden Drehmoments geschützt.

## Beschreibung

Die Erfindung betrifft eine Überlastsicherungsvorrichtung für eine Wellen-Baugruppe eines Spielzeugs, insbesondere eines Spielfahrzeugs, sowie ein Spielzeug mit einer Seilwinde mit einer derartigen Überlastsicherungsvorrichtung.

Spielzeug mit kraftbeaufschlagten Wellen ist beispielsweise in Form von Spielzeug-Abschleppwagen mit Seilwinden durch offenkundige Vorbenutzung bekannt.

Es ist eine Aufgabe der vorliegenden Erfindung, eine Überlastsicherungsvorrichtung für ein Spielzeug mit einer drehbar gelagerten Abtriebswelle und einer Wellenantriebseinrichtung derart weiterzubilden, dass die Wellen-Baugruppe und insbesondere die Abtriebswelle vor einer Überlast aufgrund eines an dieser angreifenden Drehmoments geschützt ist.

Diese Aufgabe ist erfindungsgemäß gelöst durch eine Überlastsicherungsvorrichtung mit den im Anspruch 1 angegebenen Merkmalen.

Erfindungsgemäß wurde erkannt, dass die Überlastsicherungsvorrichtung in einer zweiteilig ausgeführten Abtriebswelle untergebracht werden kann. Definiert bei Überlast, beispielsweise bei einer ruckartigen Belastung, aus Zungenaufnahmen ausrückende Federzungen ermöglichen eine gezielte Vorgabe einer Überlast-Grenzkraft, bei der die Überlastsicherungsvorrichtung auslösen und ein Durchrutschen, also eine Relativverdrehung der beiden Wellenabschnitte zueinander um die Wellenachse, ermöglichen soll. Bei dem Spielzeug, für das die Überlastsicherungsvorrichtung gedacht ist, kann es sich um ein Spielfahrzeug handeln. Auch der Einsatz bei einem anderen Spielzeug, beispielsweise bei einem stationären Spielzeugkran, ist möglich. Das Spielzeug, insbesondere die Überlastsicherungsvorrichtung, können komplett aus Kunststoff gefertigt sein. Die Steckverbindung zwischen den Wellenabschnitten der Antriebswelle kann so sein, dass der Last-Wellenabschnitt über den Antriebs-Wellenabschnitt gesteckt ist.

Eine Wellenantriebseinrichtung nach Anspruch 2 eignet sich zur Übertragung größerer Drehmomente an der Abtriebswelle. Gleichzeitig kann eine Spindel-Wellenantriebseinrichtung mit Selbsthemmung ausgeführt sein, sodass eine Überlastsituation aufgrund eines an der Abtriebswelle, beispielsweise aufgrund einer großen Last angreifenden Drehmoments im normalen Spielbetrieb durchaus auftreten kann. In diesem Falle ist die Überlastsicherung also besonders vorteilhaft.

Parallel zur Wellenachse verlaufende Federzungen haben sich zur Erzielung einer gewünscht großen Überlast-Grenzkraft als besonders geeignet herausgestellt.

Sich verjüngende freie Enden der Federzungen erleichtern ein Herstellen der Steckverbindung zwischen den Wellenabschnitten und verbessern zudem ein Überlast-Ansprechverhalten der Überlastsicherungsvorrichtung.

Eine Formung der Anlageflächen der Federzungen nach Anspruch 5 führt zu einem definierten Ausrückverhalten der Federzungen aus den Zungenaufnahmen im Überlastfall.

Ein Zahlenverhältnis der Zungenaufnahmen zu den Federzungen nach Anspruch 6 verringert Anforderungen an eine Elastizität der Federzungen. Diese können dann aus relativ hartem Kunststoffmaterial gefertigt sein.

Bei einem Spielzeug nach Anspruch 7 kommen die Vorteile der erfindungsgemäßen Überlastsicherungsvorrichtung besonders gut zum Tragen.

Ein Ausführungsbeispiel der Erfindung wird nachfolgend anhand der Zeichnung näher erläutert. In dieser zeigen:

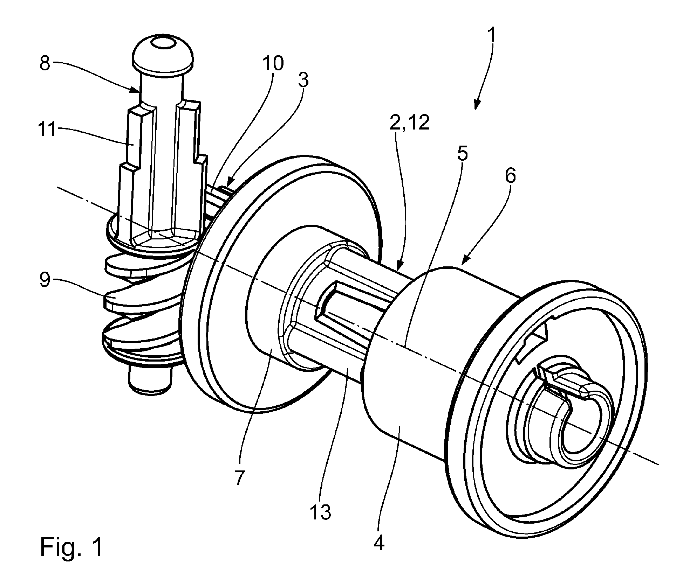

- Fig. 1: perspektivisch eine Seilwinde für ein Spielfahrzeug, wobei zwei zusammensteckbare Wellenabschnitte einer Welle der Seilwinde auseinandergezogen dargestellt sind;
- Fig. 2: eine Seitenansicht der Anordnung nach Figur 1;
- Fig. 3: einen Schnitt gemäß Linie III-III in Figur 2;
- Fig. 4: eine Seitenansicht einer abtriebswellenseitigen, also windenseitigen Baugruppe der Seilwinde nach Figur 1 mit zusammengesteckten Wellenabschnitten, gesehen aus der Gegenrichtung der Ansicht nach Figur 2, mit in Zungenaufnahmen eingerückten Federzungen einer Überlast-Steckverbindung zwischen den Wellenabschnitten;
- Fig. 5: einen Schnitt gemäß Linie V-V in Figur 4;
- Fig. 6: in einer zu Figur 4 ähnlichen Darstellung die Baugruppe mit im Vergleich zur Stellung nach Figur 4 im Überlastfall derart um eine Wellenachse relativ zueinander verdrehten Wellenabschnitten, dass die Federzungen aus den Zungenaufnahmen der Überlast-Steckverbindung ausgerückt sind; und
- Fig. 7: einen Schnitt gemäß Linie VII-VII in Figur 6.

Eine Seilwinde 1 als Beispiel für eine Wellen-Baugruppe eines Spielzeugs ist mit einer Überlastsicherungsvorrichtung 2 ausgerüstet. Letztere soll eine Wellenantriebseinrichtung 3 vor einer Überlast aufgrund eines an einem Last-Wellenabschnitt 4 der Seilwinde 1 angreifenden Drehmoments schützen. Die Seilwinde 1 ist insgesamt aus Kunststoffkomponenten ausgebildet. Die Komponenten der Seilwinde 1 sind als Spritzgussbauteile ausgeführt.

Die Seilwinde hat eine drehbar um eine Wellenachse 5 gelagerte Abtriebswelle 6, zu der neben dem lastseitigen Last-Wellenabschnitt 4, auf dem ein Seil aufgewickelt werden kann, noch ein antriebseitiger Antriebs-Wellenabschnitt 7 gehört. Die Antriebswelle 6 ist also zweiteilig ausgeführt. Der Last-Wellenabschnitt 4 ist über den Antriebs-Wellenabschnitt 7 gesteckt.

Die Wellenantriebseinrichtung 3 hat eine Antriebsspindel 8, deren Spindelgewinde 9 mit einer Außen-Verzahnung 10 des Antriebs-Wellenabschnitts 7 in Antriebsverbindung steht. Die Antriebsspindel 8 hat eine Mehrzahl von Steckleisten 11 zur drehfesten Verbindung mit einem in der Zeichnung nicht dargestellten Betätigungselement, beispielsweise mit einer Kurbel.

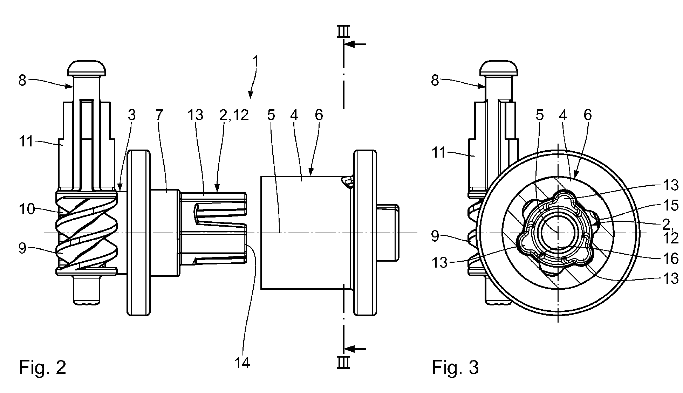

Eine Steckverbindung 12 zwischen dem Antriebs-Wellenabschnitt 7 und dem Last-Wellenabschnitt 4 ist Teil der Überlastsicherungsvorrichtung 2. Die Steckverbindung 12 umfasst mit dem Antriebs-Wellenabschnitt 7 verbundene Federzungen 13. Insgesamt liegen drei um die Wellenachse 5 gleichverteilt angeordnete Federzungen 13 vor. Die Federzungen 13 erstrecken sich parallel zur Wellenachse 5. Die Federzungen 13 haben, wie insbesondere der Seitenansicht nach Figur 2 zu entnehmen ist, sich verjüngende freie Enden 14. Die Federzungen 13 sind einstückig am Antriebs-Wellenabschnitt 7 angeformt und mit diesem elastisch verbunden.

Teil der Steckverbindung 12 sind insgesamt sechs Zungenaufnahmen 15, die in einer inneren Umfangswand 16 des Last-Wellenabschnitts 4 ausgeführt sind. Die Zungenaufnahmen 15 sind im Bereich ihrer Anlageflächen zur Anlage der Federzungen 13 komplementär zu den Federzungen 13 ausgeformt. Die äußeren Anlageflächen der Federzungen 13 sind zur Anlage an den Zungenaufnahmen 15 in Umfangsrichtung um die Wellenachse 5 kontinuierlich und stufenfrei geformt, sodass es nicht zu einer unerwünschten Verzahnung zwischen den Federzungen 13 und den Zungenaufnahmen 15 kommt.

Die Anzahl der Zungenaufnahmen 15 in Umfangsrichtung um die Wellenachse 5 ist größer als die Anzahl der Federzungen 13 und bei der dargestellten Ausführung doppelt so groß.

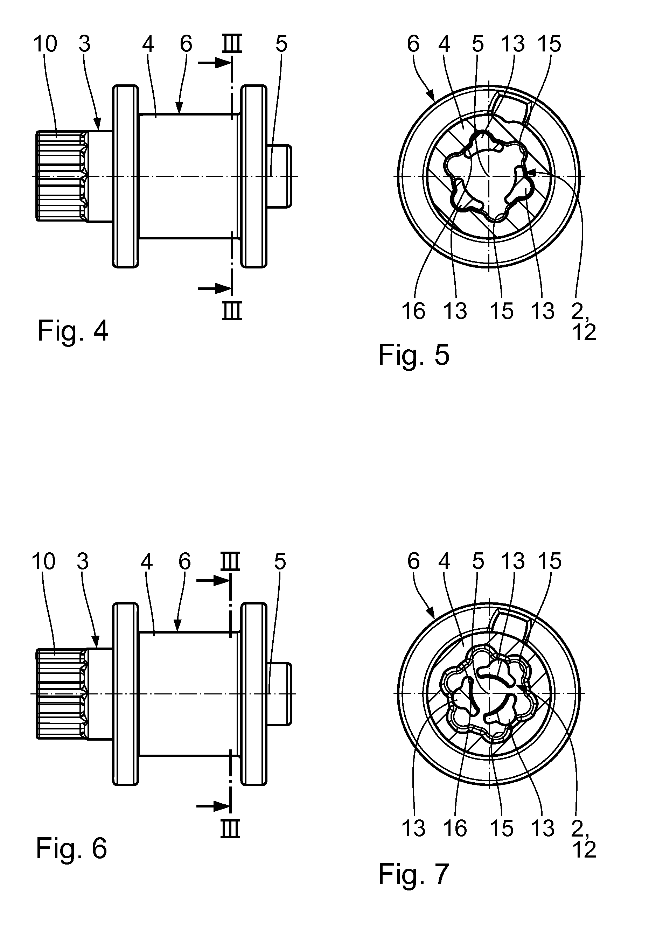

Bei einer Überlast aufgrund eines an der Antriebswelle 6 angreifenden Drehmoments, beispielsweise aufgrund eines starken und/oder ruckartigen Seilzuges am Last-Wellenabschnitt 4 oder jedenfalls prinzipiell auch aufgrund einer zu großen Antriebs-Kraftbeaufschlagung auf den Antriebs-Wellenabschnitt 7 über die Wellenantriebseinrichtung 3 rücken die Federzungen 13 aus den Zungenaufnahmen 15 aus. Dies ist in der Figur 7 dargestellt. Bei ausgerückten Federzungen 13 sind die beiden Wellenabschnitte 4, 7 relativ zueinander um die Wellenachse 5 verdrehbar.

Ein Ansprechen der Überlastsicherungsvorrichtung 2, also ein Durchrutschen einer ansonsten drehfesten Verbindung zwischen den beiden Wellenabschnitten 4, 7, macht sich für den Benutzer hör- und fühlbar bemerkbar. Die Ursache für die Überlast kann dann durch den Benutzer, also insbesondere durch das spielende Kind, beseitigt werden.

Bei einer nicht dargestellten Ausführung der Seilwinde 1 sind die Federzungen 13 am Last-Wellenabschnitt und die Federaufnahmen 15 am Antriebs-Wellenabschnitt angebracht.

Die Seilwinde 1 kann bei einem Spielfahrzeug in Form einer Abschleppseilvorrichtung zum Einsatz kommen.

## Patentansprüche

1. Überlastsicherungsvorrichtung (2) für eine Wellen-Baugruppe eines Spielzeugs
- mit einer drehbar gelagerten Abtriebswelle (6) mit einer Wellenachse (5),
- mit einer Wellenantriebseinrichtung (3), die durch die Überlastsicherungsvorrichtung (2) vor einer Überlast aufgrund eines an der Abtriebswelle (6) angreifenden Drehmoments geschützt werden soll,
- wobei die Abtriebswelle (6) mindestens zweiteilig ausgeführt ist und aufweist:
-- einen antriebsseitigen Antriebs-Wellenabschnitt (7),
-- einen lastseitigen Last-Wellenabschnitt (4), der mit dem Antriebs-Wellenabschnitt (7) zusammengesteckt ist,
- wobei eine Steckverbindung (12) zwischen dem Antriebs-Wellenabschnitt (7) und dem Last-Wellenabschnitt (4) mit einem der Wellenabschnitte (7) elastisch verbundene Federzungen (13) aufweist, die mit Zungenaufnahmen (15) im anderen der Wellenabschnitte (4) derart zusammenwirken, dass bei einer Überlast die Federzungen (13) aus den Zungenaufnahmen (15) ausrücken, sodass die beiden Wellenabschnitte (4, 7) relativ zueinander um die Wellenachse (5) verdrehbar sind.

2. Überlastsicherungsvorrichtung nach Anspruch 1, **dadurch gekennzeichnet, dass** die Wellenantriebseinrichtung (3) eine Antriebsspindel (8) aufweist, deren Spindelgewinde (9) mit einer Verzahnung (10) des Antriebs-Wellenabschnitts (7) in Antriebsverbindung steht.

3. Überlastsicherungsvorrichtung nach Anspruch 1 oder 2, **dadurch gekennzeichnet, dass** die Federzungen (13) parallel zur Wellenachse (5) verlaufen.

4. Überlastsicherungsvorrichtung nach einem der Ansprüche 1 bis 3, **dadurch gekennzeichnet, dass** die Federzungen (13) sich verjüngende freie Enden (14) aufweisen.

5. Überlastsicherungsvorrichtung nach einem der Ansprüche 1 bis 4, **dadurch gekennzeichnet, dass** Anlageflächen der Federzungen (13) zur Anlage an den Zungenaufnahmen (15) in Umfangsrichtung um die Wellenachse (5) kontinuierlich stufenfrei geformt sind.

6. Überlastsicherungsvorrichtung nach einem der Ansprüche 1 bis 5, **dadurch gekennzeichnet, dass** die Anzahl der Zungenaufnahmen (15) in Umfangsrichtung um die Wellenachse (5) größer ist als die Anzahl der Federzungen (13).

7. Spielzeug mit einer Seilwinde (1) mit einer Überlastsicherungsvorrichtung (2) nach einem der Ansprüche 1 bis 6.
